# EUROPÄISCHE PATENTANMELDUNG

(11) **EP 2 386 775 A2**
(43) Veröffentlichungstag der Anmeldung: **16.11.2011**
(21) Anmeldenummer: 11156511.5
(22) Anmeldetag: 02.03.2011
(51) Int. Cl.: F16F 1/36, F16F 7/10, F16F 7/108

(54) **Schwingungstilger**

(30) Priorität: 11.05.2010 DE 102010020032
(71) Anmelder: J. Eberspächer GmbH & Co. KG, 73730 Esslingen (DE)
(72) Erfinder: Spieth, Arnulf, 73269, Hochdorf (DE)
(74) Vertreter: BRP Renaud & Partner

(57) **Zusammenfassung**

Die vorliegende Erfindung betrifift eine Verwendung eines elektroaktiven Polymers (7) zum Herstellen eines Schwingungstilgers (6).

## Beschreibung

Die vorliegende Erfindung betrifft die Tilgung von Schwingungen in einem Schwingungssystem, zum Beispiel in einer Abgasanlage einer Brennkraftmaschine. Die Erfindung betrifft außerdem die Verwendung eines elektroaktiven Polymers.

Ein Schwingungstilger oder kurz Tilger bedämpft Schwingungen in einem Schwingungssystem dadurch, dass er als zentrales Wirkelement eine eigene Schwingmasse aufweist, die gegenläufig zum schwingenden Hauptobjekt des Schwingungssystems schwingt. Die Schwingmasse des Tilgers kann auch als Gegenschwingmasse bezeichnet werden, da sie gegenphasig zur Erregungsschwingung des Schwingungssystems schwingt. Die Gegenschwingmasse oder Tilgermasse bildet zusammen mit einer Tilgerfeder ein physikalisches Pendel, dessen Eigenfrequenz in einem bestimmten Verhältnis zu der zu bedämpfenden Schwingungsfrequenz des Schwingungssystems eingestellt ist. Bei dieser Eigenfrequenz kann der Tilger große Auslenkungen ausführen und bei dieser Frequenz für seine eigenen Schwingbewegungen der zu bedämpfenden Schwingungsstruktur Schwingungsenergie entziehen. Ein Schwingungstilger wird im englischen Sprachgebrauch als "tuned mass damper" oder als "active mass damper" oder als "harmonicabsorber" bezeichnet.

Schwingungstilger kommen häufig dann zum Einsatz, wenn im Schwingungssystem sogenannte "Resonanzkatastrophen" verhindert werden sollen. Eine Resonanzkatastrophe tritt dann ein, wenn das Schwingungssystem eine Resonanzfrequenz aufweist und im Bereich der Resonanzfrequenz zu Schwingungen angeregt wird. In diesem Fall können die Schwingungsamplituden zu unzulässig hohen Werten anwachsen bzw. sich "aufschaukeln". In der Folge kann es zur Desintegration des Schwingungssystems kommen. Stimmt man nun den Schwingungstilger genau auf diese Resonanzfrequenz des Schwingungssystems ab, wird dem Schwingungssystem im Bereich der Resonanzfrequenz sehr viel Schwingungsenergie entzogen, wodurch die Schwingungsamplituden signifikant reduziert werden können. Besitzt das Schwingungssystem mehr als eine kritische Resonanzfrequenz, müssen dementsprechend mehrere, unterschiedlich abgestimmte Schwingungstilger vorgesehen werden. Der Aufwand hierzu ist vergleichsweise groß. Des Weiteren können sich die Schwingungstilger durch ihre Anbindung an das Schwingungssystem gegenseitig hinsichtlich ihrer Funktion behindern.

Die vorliegende Erfindung beschäftigt sich mit dem Problem, für einen Schwingungstilger bzw. für eine damit ausgestattete Abgasanlage eine verbesserte Ausführungsform anzugeben, die sich insbesondere dadurch auszeichnet, dass mehr als eine Schwingungsfrequenz bedämpft werden kann.

Erfindungsgemäß wird dieses Problem durch die Gegenstände der unabhängigen Ansprüche gelöst. Vorteilhafte Ausführungsformen sind Gegenstand der abhängigen Ansprüche.

Die Erfindung beruht auf dem allgemeinen Gedanken, zum Herstellen eines derartigen Schwingungstilgers ein elektroaktives Polymer zu verwenden. Elektroaktive Polymere sind Polymere, die durch das Anlegen einer elektrischen Spannung ihre Form ändern. Sie können beispielsweise als Aktoren zum Durchführen von Bewegungen oder als Sensoren zum Feststellen von Bewegungen verwendet werden. Unterschieden werden ionische elektroaktive Polymere und elektronische elektroaktive Polymere. Bei ionischen elektroaktiven Polymeren beruht der Wirkungsmechanismus auf Massentransport, insbesondere Diffusion, von Ionen. Untergruppen derartiger ionischer elektroaktiver Polymere sind leitfähige Polymere, ionische Metall-Polymer-Komposite und ionische Gele. Im Unterschied dazu beruht die Wirkungsweise elektronischer elektroaktiver Polymere auf elektronischem Ladungstransport. Zu dieser Gruppe lassen sich elektrostriktive und ferroelektrische Polymere zählen sowie dielektrische Elastomere.

Die Erfindung nutzt nun die Erkenntnis, dass sich durch Anlegen einer Spannung an den elektroaktiven Polymer die Steifigkeit bzw. die Elastizität des Polymers variieren lässt. Mit Bezug auf einen Schwingungstilger mit elektroaktivem Polymer bedeutet dies, dass durch Anlegen einer elektrischen Spannung an den elektroaktiven Polymer die Federelastizität und somit die Eigenfrequenz des Schwingungstilgers verändert werden kann. Insbesondere ist es dadurch möglich, mit dem gleichen Schwingungstilger unterschiedliche Frequenzen zu bedämpfen. Von besonderem Vorteil ist dabei der Umstand, dass der jeweilige Schwingungstilger nur eine einzige Kopplungsstelle zum Schwingungssystem besitzt, wodurch Wechselwirkungen vermieden werden können, die bei der Verwendung von zwei oder mehr verschiedenen Schwingungstilgern, die an zwei oder mehr verschiedenen Stellen an das Schwingungssystem angeschlossen sind, auftreten können.

Entsprechend einer vorteilhaften Ausführungsform kann der Schwingungstilger zumindest einen eine Gegenschwingmasse bildenden Tilgerkörper und eine Tilgerfeder aufweisen, wobei die Tilgerfeder vollständig oder zumindest in einem Abschnitt aus dem elektroaktiven Polymer gebildet ist. Alternativ kann der Schwingungstilger zumindest einen federelastischen Tilgerkörper aufweisen, der eine Gegenschwingmasse bildet und vollständig oder zumindest teilweise aus dem elektroaktiven Polymer gebildet ist. Unterschieden werden somit zwei verschiedene Bauformen für den Schwingungstilger mit elektroaktivem Polymer. Bei der einen Bauform umfasst der Schwingungstilger konventionell einen die Gegenschwingmasse bildenden Tilgerkörper und zusätzlich dazu eine Tilgerfeder zur Kopplung des Tilgerkörpers mit dem Schwingungssystem. In diesem Fall ist die Tilgerfeder zumindest teilweise aus dem elektroaktiven Polymer hergestellt, um die Federsteifigkeit und somit die Eigenfrequenz des Schwingungstilgers über die an das elektroaktive Polymer angelegte elektrische Spannung zu verändern. Bei der anderen Bauform ist der Schwingungstilger durch einen Tilgerkörper gebildet, der wieder die Gegenschwingmasse bildet, in diesem Fall jedoch selbst federelastisch ist und zumindest teilweise aus dem elektroaktiven Polymer gebildet ist. Mit anderen Worten, bei dieser Bauform sind Tilgerfeder und Gegenschwingmasse integral im Tilgerkörper ausgebildet. Durch Variieren der am elektroaktiven Polymer anliegenden elektrischen Spannung kann auch hier die Federelastizität und somit die Eigenfrequenz des Schwingungstilgers verändert werden.

Vorzugsweise kann nun die Verwendung des elektroaktiven Polymers im Schwingungstilger so modifiziert werden, dass eine Eigenfrequenz des Schwingungstilgers abhängig von einer an das elektroaktive Polymer angelegten elektrischen Spannung einstellbar ist. Somit lassen sich mit einem einzigen Schwingungstilger unterschiedliche Tilgungsfrequenzen realisieren, bei denen der Schwingungstilger dem Schwingungssystem signifikant Schwingungsenergie entzieht.

Besonders zweckmäßig ist dabei eine Ausführungsform, bei welcher eine elektrische Steuereinrichtung vorgesehen ist, die abhängig von wenigstens einer Eingangsgröße das elektroaktive Polymer zum Einstellen einer Eigenfrequenz des Schwingungstilgers ansteuert. Bei einer Abgasanlage einer Brennkraftmaschine ändert sich beispielsweise die Schwingungsfrequenz der Abgasanlage, also des Schwingungssystems mit der Drehzahl der Brennkraftmaschine. Erreicht diese Schwingungsfrequenz den Frequenzbereich einer ersten Resonanzfrequenz, kann mit Hilfe der Steuereinrichtung die Eigenfrequenz des Schwingungstilgers auf diese erste Resonanzfrequenz eingestellt werden. Erreicht die Schwingungsanregung der Abgasanlage bei einer anderen Drehzahl der Brennkraftmaschine eine zweite Resonanzfrequenz, kann mit Hilfe der elektrischen Steuereinrichtung nun die Eigenfrequenz des Schwingungstilgers auf diese andere Resonanzfrequenz abgestimmt werden. Ebenso ist es möglich, den Schwingungstilger so auszulegen, dass er im unbestromten Zustand eine Eigenfrequenz besitzt, die zum Bedämpfen einer typischen Resonanzfrequenz des Schwingungssystems dient. Zum Bedämpfen einer davon abweichenden anderen Frequenz oder Resonanzfrequenz kann dann über das Anlegen einer entsprechenden Spannung eine geeignete Adaption der Eigenfrequenz des Schwingungstilgers realisiert werden.

Entsprechend einer anderen Ausführungsform kann das elektroaktive Polymer elektrisch zu Schwingungen angeregt werden, so dass ein aktiver Schwingungstilger realisierbar ist. Mit Hilfe eines aktiven Schwingungstilgers lassen sich mit Hilfe aktiv erzeugter Gegenschwingungen der Gegenmasse auch außerhalb der Eigenfrequenz des Schwingungstilgers Schwingungen im Schwingungssystem signifikant dämpfen, indem über die Gegenschwingungen Energie aus dem Schwingungssystem herausgezogen wird. Dabei kann beispielsweise vorgesehen sein, im aktuellen Frequenzband der Schwingungen des Schwingungssystems stets die Frequenz mit der größten Amplitude durch Erzeugen diesbezüglich abgestimmter aktiver Gegenschwingungen zu reduzieren. Ebenso ist es denkbar, die Schwingungen der Gegenschwingung so zu modulieren, dass gleichzeitig mehrere Gegenschwingungsbewegungen überlagert werden, um dadurch gleichzeitig mehrere verschiedene Schwingungsfrequenzen des Schwingungssystems aktiv bedämpfen zu können.

Die Erfindung betrifft somit insbesondere auch einen Schwingungstilger zum Bedämpfen eines Schwingungssystems, insbesondere eines Kraftfahrzeugs, der zumindest einen Tilgerkörper aufweist, der indirekt oder direkt mit dem Schwingungssystem koppelbar ist. Der Tilgerkörper kann dabei selbst zumindest teilweise aus dem elektroaktiven Polymer gebildet sein oder eine Tilgerfeder zur indirekten Kopplung des Tilgerkörpers mit dem Schwingungssystem aufweisen, die zumindest teilweise aus dem elektroaktiven Polymer gebildet ist. Dieser Schwingungstilger kann nun als einstellbarer Schwingungstilger ausgestaltet sein, dessen Eigenfrequenz abhängig von einer an das jeweilige elektroaktive Polymer angelegten elektrischen Spannung einstellbar ist. Ebenso kann der Schwingungstilger als aktiver Schwingungstilger ausgestaltet sein, der abhängig von an das jeweilige elektroaktive Polymer angelegten elektrischen Spannungen und/oder elektrischen Spannungsimpulsen zu Eigenschwingungen anregbar ist.

Eine hierzu verwendete Steuereinrichtung kann mit mindestens einem Schwingungssensor elektrisch verbunden sein, der seinerseits mit dem Schwingungssystem derart gekoppelt ist, dass er dessen Schwingungen erfassen kann. Die Steuereinrichtung kann nun abhängig von den erfassten Schwingungen die Eigenfrequenz des (passiven) Schwingungstilgers variieren oder den (aktiven) Schwingungstilger zur Erzeugung von geeigneten, entgegenwirkenden Eigenschwingungen ansteuern. Zusätzlich oder alternativ kann die Steuereinrichtung mit einem Motorsteuergerät elektrisch gekoppelt sein und von diesem die aktuelle Drehzahl der Brennkraftmaschine abgreifen. Die Steuereinrichtung kann nun in Abhängigkeit dieser Drehzahl die Eigenfrequenz des Schwingungstilgers variieren oder den Schwingungstilger zu Eigenschwingungen ansteuern.

Bei einer besonders vorteilhaften Ausführungsform kann der Schwingungstilger zumindest zwei Tilgerkörper aufweisen, die an einem gemeinsamen Tragkörper schwingungsfähig angeordnet sind, wobei dieser Tragkörper fest mit dem Schwingungssystem verbunden werden kann. Zumindest einer dieser Tilgerkörper oder eine zugehörige Tilgerfeder ist dann zumindest teilweise aus dem elektroaktiven Polymer gebildet. Durch diese Bauweise lassen sich im gleichen Schwingungstilger unterschiedliche Tilgungsfrequenzen realisieren, wobei zumindest eine dieser Tilgungsfrequenzen außerdem veränderbar ist.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch
- Fig. 1: eine stark vereinfachte Prinzipdarstellung einer Abgasanlage,
- Fig. 2: eine stark vereinfachte Prinzipdarstellung eines Schwingungstilgers,
- Fig. 3: eine stark vereinfachte Prinzipdarstellung eines anderen Schwingungstilgers,
- Fig. 4: eine stark vereinfachte Prinzipdarstellung eines weiteren Schwingungstilgers.

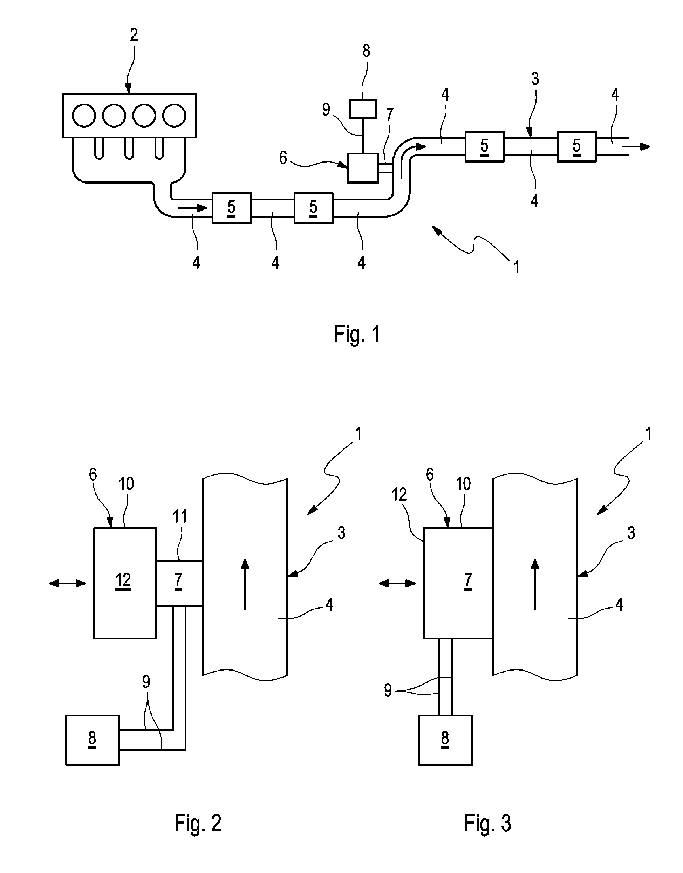

Entsprechend Fig. 1 umfasst eine Abgasanlage 1 einer Brennkraftmaschine 2, die vorzugsweise in einem Fahrzeug angeordnet sein kann, einen Abgasstrang 3 mit zumindest einem Abgasrohr 4 und zumindest einer Abgasbehandlungseinrichtung 5, die in das Abgasrohr 4 eingebunden ist. Im Beispiel sind mehrere Abgasbehandlungseinrichtungen 5 dargestellt. Eine derartige Abgasbehandlungseinrichtung 5 kann z.B. ein Katalysator, ein Partikelfilter oder ein Schalldämpfer oder eine beliebige Kombination daraus sein. Eine entsprechende Abgasströmung ist in den Fig. 1-4 durch einen Richtungspfeil angedeutet.

Die Abgasanlage 1 bildet ein schwingungsfähiges System oder Schwingungssystem, das im Folgenden ebenfalls mit 1 bezeichnet werden kann und das im Betrieb der Brennkraftmaschine 2 zu Schwingungen angeregt wird. Um diese Schwingungen zu bedämpfen, ist zumindest ein Schwingungstilger 6 vorgesehen, der mit dem Abgasstrang 3 gekoppelt ist. Dieser Schwingungstilger 6 weist ein elektroaktives Polymer 7 auf, an das mit Hilfe einer Steuereinrichtung 8 über entsprechende Steuerleitungen 9 eine elektrische Spannung anlegbar ist. Hierdurch kann die Eigenfrequenz des Schwingungstilgers 6 variiert werden. Ebenso ist es möglich, durch eine entsprechende Ansteuerung des elektroaktiven Polymers 7 den Schwingungstilger 6 als aktiven Schwingungstilger 6 zu betreiben.

Entsprechend Fig. 2 kann der Schwingungstilger 6 zumindest einen Tilgerkörper 10 und eine Tilgerfeder 11 aufweisen. Der Tilgerkörper 10 bildet eine Gegenschwingmasse 12 und die Tilgerfeder 11 dient zum Koppeln des Schwingungstilgers 6 mit dem Schwingungssystem 1, also hier mit der Abgasanlage 1. Im Beispiel der Fig. 2 ist die Tilgerfeder 11 vollständig oder zumindest teilweise, also zumindest in einem Abschnitt aus dem elektroaktiven Polymer 7 gebildet. Dementsprechend ist die Steuereinrichtung 8 über die Steuerleitungen 9 hier an die Tilgerfeder 11 angeschlossen.

Fig. 3 zeigt eine andere Ausführungsform des Schwingungstilgers 6, der wieder einen Tilgerkörper 10 aufweist, der wieder die Gegenschwingmasse 12 bildet, in diesem Fall jedoch federelastisch ausgestaltet ist und selbst vollständig oder zumindest teilweise aus dem elektroaktiven Polymer 7 gebildet ist. Bei dieser Ausführungsform sind somit die Funktion der Gegenschwingmasse 12 und der Tilgerfeder 11 in den Tilgerkörper 10 integriert, während bei der in Fig. 2 gezeigten Ausführungsform die Tilgerfeder 11 separat zum Tilgerkörper 10 ausgestaltet ist.

Der hier vorgestellte Schwingungstilger 6 kann als passiver Schwingungstilger 6 mit während des Betriebs einstellbarer Eigenfrequenz betrieben werden. Bei einem solchen passiven Schwingungstilger 6 wird die Gegenschwingmasse 12 durch die Schwingungen des Schwingungssystems 1 zu Schwingungen angeregt, was in den Fig. 2-4 durch Doppelpfeile angedeutet ist. Der Tilger 6 besitzt eine Eigenfrequenz, bei der die Gegenschwingmasse 12 entgegengesetzt zu den Schwingungen des Schwingungssystems 1 schwingt und dadurch effektiv Schwingungsenergie aus dem Schwingungssystem 1 herauszieht. Diese Eigenfrequenz des Schwingungstilgers 6 kann nun abhängig von einer an das elektroaktive Polymer 7 mit Hilfe der Steuereinrichtung 8 angelegten elektrischen Spannung eingestellt bzw. verändert werden. Somit lassen sich für unterschiedliche Schwingungsanregungen innerhalb des Schwingungssystems 1 entsprechend angepasste Eigenfrequenzen am Tilger 6 einstellen, um wahlweise unterschiedliche Frequenzen des Schwingungssystems 1 bedämpfen zu können. Beispielsweise kann die Steuereinrichtung 8 abhängig von einer Eingangsgröße das elektroaktive Polymer 7 zum Einstellen einer Eigenfrequenz des Schwingungstilgers 6 ansteuern.

Der hier vorgestellte Schwingungstilger 6 kann auch als aktiver Schwingungstilger 6 mit während des Betriebs einstellbarer Gegenschwingungsfrequenz betrieben werden. Bei einem solchen aktiven Schwingungstilger 6 ist es mit Hilfe der Steuereinrichtung 8 möglich, das elektroaktive Polymer 7 bzw. die Gegenschwingungsmasse 12 des Tilgers 6 elektrisch zu Schwingungen anzuregen. Somit ist es insbesondere möglich, auch außerhalb der Eigenfrequenz des Schwingungstilgers 6 Schwingungen der Gegenschwingmasse 12 zu erzeugen, die gegenphasig Energie in die Abgasanlage 1 bzw. in das jeweilige Schwingungssystem 1 einleiten, und zwar bezüglich einer zu bedämpfenden Schwingungsfrequenz soweit phasenverschoben, dass es zu einer Reduzierung, insbesondere zu einer Auslöschung, der Schwingungen des Schwingungssystems 1 kommt.

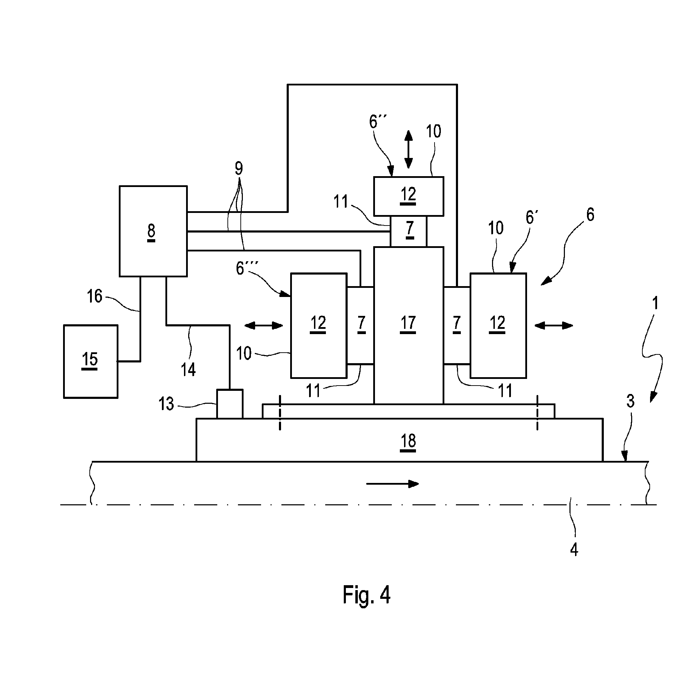

Beispielsweise kann die Steuereinrichtung 8 gemäß Fig. 4 mit wenigstens einem Schwingungssensor 13, zum Beispiel über eine Signalleitung 14, elektrisch verbunden sein. Dieser Schwingungssensor 13 ist auf geeignete Weise mit dem Schwingungssystem 1 gekoppelt und erfasst die Schwingungen des Schwingungssystems 1. Die Steuereinrichtung 8 kann nun die erfassten Schwingungen als Eingangsgröße verwenden, in deren Abhängigkeit die Steuerung 8 den Schwingungstilger 6 betätigt. Die Betätigung des Schwingungstilgers 6 kann dabei dahingehend erfolgen, dass die Eigenfrequenz des Schwingungstilgers 6 variiert wird und/oder dass der Schwingungstilger 6 bzw. seine Gegenschwingmasse 12 zu Eigenschwingungen angeregt wird.

Zusätzlich oder alternativ kann die Steuereinrichtung 8 gemäß Fig. 4 mit einem Motorsteuergerät 15 elektrisch verbunden sein, zum Beispiel über eine Signalleitung 16. Das Motorsteuergerät 15 dient in üblicher Weise zur Betätigung der Brennkraftmaschine 2 und kennt üblicherweise die aktuelle Drehzahl der Brennkraftmaschine 2. Die Steuereinrichtung 8 kann nun diese Drehzahl vom Motorsteuergerät 15 abfragen und als Eingangsgröße für die Betätigung des Schwingungstilgers 6 verwenden. Diese Ausführungsform beruht auf der Überlegung, dass die Schwingungen der Abgasanlage 1 stark mit der Drehzahl der Brennkraftmaschine 2 korrelieren.

Bei der in Fig. 4 gezeigten Ausführungsform besitzt der Tilger 6 einen Tragkörper 17, der fest mit dem Schwingungssystem 1 verbunden ist. Beispielsweise ist der Tragkörper 17 an eine Konsole 18 angeflanscht, die ihrerseits fest am Abgasrohr 4 bzw. am Abgasstrang 3 angebracht ist. Somit schwingt der Tragkörper 17 gleichförmig mit dem Abgasrohr 4 bzw. mit dem Abgasstrang 3. Bei dieser Ausführungsform weist der Schwingungstilger 6 zumindest zwei Tilgerkörper 10 auf. Im Beispiel sind insgesamt drei derartige Tilgerkörper 10 vorgesehen. Diese Tilgerkörper 10 sind gemeinsam am Tragkörper 17 und jeweils für sich schwingungsfähig angeordnet. Zumindest einer dieser Tilgerkörper 10 oder zumindest eine zugehörige Tilgerfeder 11 ist vollständig oder zumindest teilweise aus dem elektroaktiven Polymer 7 gebildet. Im gezeigten Beispiel ist jeder Tilgerkörper 10 über eine eigene Tilgerfeder 11 schwingungsfähig am gemeinsamen Tragkörper 17 angebracht. Im Beispiel sind ferner die Tilgerfedern 11 jeweils zumindest teilweise aus dem elektroaktiven Polymer 7 gebildet. Die elektroaktiven Polymere 7 sind hier an die gemeinsame Steuereinrichtung 8 angeschlossen. Das heißt, die Steuereinrichtung 8 kann die elektroaktiven Polymere 7 gemeinsam oder einzeln ansteuern bzw. betätigen.

Die drei Tilgerkörper 10 bilden hier jeweils eine Gegenschwingmasse 12, die zweckmäßig unterschiedlich groß dimensioniert sein können. Darüber hinaus können sie am Tragkörper 17 so angeordnet sein, dass sie in unterschiedlichen Richtungen schwingen. Zweckmäßig sind hier senkrecht aufeinanderstehende Schwingungsrichtungen realisiert. Darüber hinaus können die einzelnen Tilgerfedern 11 unterschiedlich ausgelegt sein.

Der jeweilige Tilgerkörper 10 bildet mit der zugehörigen Tilgerfeder 11 einen Teil-Schwingungstilger 6', 6", 6"', so dass im Beispiel der Fig. 4 insgesamt drei solche Teil-Schwingungstilger 6', 6", 6"' innerhalb des Schwingungstilgers 6 realisiert sind. Diese Teil-Schwingungstilger 6', 6", 6"' können sich durch unterschiedliche Eigenfrequenzen voneinander unterscheiden.

Die Steuereinrichtung 8 kann nun abhängig von den im Schwingungssystem 1 entstehenden, zu bedämpfenden Schwingungen an den Tilgerfedern 11 elektrische Spannungen anlegen, um die Eigenfrequenz wenigstens eines der Teil-Schwingungstilger 6', 6", 6"' individuell einstellen bzw. anpassen zu können. Darüber hinaus kann die Steuereinrichtung 8 zumindest einen dieser Teil-Schwingungstilger 6', 6", 6"' als aktiven Teil-Schwingungstilger 6', 6", 6"' betreiben. Hierzu wird die jeweilige Gegenschwingmasse 12 mit Hilfe von elektrischen Spannungen und/oder elektrischen Spannungsimpulsen, die an das elektroaktive Polymer 7 der jeweiligen Tilgerfeder 11 angelegt werden, zum Erzeugen der geeigneten Gegenschwingungen angesteuert.

## Patentansprüche

1. Verwendung eines elektroaktiven Polymers (7) zum Herstellen eines Schwingungstilgers (6).

2. Verwendung nach Anspruch 1,
**dadurch gekennzeichnet,**
- **dass** der Schwingungstilger (6) zumindest einen eine Gegenschwingmasse (12) bildenden Tilgerkörper (10) und eine Tilgerfeder (11) aufweist, wobei die Tilgerfeder (11) zumindest in einem Abschnitt aus dem elektroaktiven Polymer (7) gebildet ist, oder
- **dass** der Schwingungstilger (6) zumindest einen federelastischen Tilgerkörper (10) aufweist, der eine Gegenschwingmasse (12) bildet und zumindest teilweise aus dem elektroaktiven Polymer (7) gebildet ist.

3. Verwendung nach Anspruch 1 oder 2,
**dadurch gekennzeichnet,**
**dass** eine Eigenfrequenz des Schwingungstilgers (6) abhängig von einer an das elektroaktive Polymer (7) angelegten elektrischen Spannung einstellbar ist.

4. Verwendung nach einem der Ansprüche 1 bis 3,
**dadurch gekennzeichnet,**
**dass** eine elektrische Steuereinrichtung (8) abhängig von einer Eingangsgröße das elektroaktive Polymer (7) zum Einstellen einer Eigenfrequenz des Schwingungstilgers (6) ansteuert.

5. Verwendung nach einem der Ansprüche 1 bis 4,
**dadurch gekennzeichnet,**
**dass** das elektroaktive Polymer (7) elektrisch zu Schwingungen anregbar ist, so dass ein aktiver Schwingungstilger (6) realisierbar ist.

6. Schwingungstilger zum Bedämpfen eines Schwingungssystems (1), insbesondere eines Kraftfahrzeugs,
- mit mindestens einem Tilgerkörper (10), der indirekt oder direkt mit dem Schwingungssystem (1) koppelbar ist,
- wobei der Tilgerkörper (10) oder eine Tilgerfeder (11) zumindest teilweise aus einem elektroaktiven Polymer (7) gebildet ist.

7. Schwingungstilger nach Anspruch 6,
**dadurch gekennzeichnet,**
**dass** eine elektrische Steuereinrichtung (8) vorgesehen ist, die mit dem elektroaktiven Polymer (7) elektrisch verbunden ist und die abhängig von einer Eingangsgröße das elektroaktive Polymer (7) zum Einstellen einer Eigenfrequenz des Schwingungstilgers (6) und/oder zum Erzeugen von Eigenschwingungen des Schwingungstilgers (6) ansteuert.

8. Schwingungstilger nach Anspruch 7,
**dadurch gekennzeichnet,**
- **dass** die Steuereinrichtung (8) mit mindestens einem Schwingungssensor (13) elektrisch verbunden ist, der mit dem Schwingungssystem (1) gekoppelt ist und dessen Schwingungen erfasst, wobei die Steuereinrichtung (8) die erfassten Schwingungen als Eingangsgröße zur Betätigung des Schwingungstilgers (6) verwendet, und/oder
- **dass** die Steuereinrichtung (8) mit einem Motorsteuergerät (15) zum Betätigen einer Brennkraftmaschine (2) elektrisch verbunden ist und von diesem eine aktuelle Drehzahl der Brennkraftmaschine (2) erhält, wobei die Steuereinrichtung (8) die erhaltene Drehzahl als Eingangsgröße zur Betätigung des Schwingungstilgers (6) verwendet.

9. Schwingungstilger nach einem der Ansprüche 6 bis 8,
**dadurch gekennzeichnet,**
**dass** zumindest zwei Tilgerkörper (10) vorgesehen sind, die an einem gemeinsamen Tragkörper (17) schwingungsfähig angeordnet sind, der fest mit dem Schwingungssystem (1) verbindbar ist, wobei zumindest einer der Tilgerkörper (10) oder eine zugehörige Tilgerfeder (11) zumindest teilweise aus dem elektroaktiven Polymer (7) gebildet ist.

10. Schwingungstilger nach Anspruch 9,
**dadurch gekennzeichnet,**
**dass** zumindest zwei Tilgerkörper (10) oder deren Tilgerfedern (11) zumindest teilweise aus dem elektroaktiven Polymer (7) gebildet sind, wobei die elektroaktiven Polymere (7) über eine gemeinsame Steuereinrichtung (8) betätigbar sind.

11. Passiver Schwingungstilger, dessen Eigenfrequenz einstellbar ist, mit einem Schwingungstilger (6) nach Anspruch 6, dessen Eigenfrequenz abhängig von einer an das jeweilige elektroaktive Polymer (7) angelegten elektrischen Spannung einstellbar ist.

12. Aktiver Schwingungstilger, der zu Eigenschwingungen anregbar ist, mit einem Schwingungstilger (6) nach Anspruch 6, der abhängig von an das jeweilige elektroaktive Polymer (7) angelegten elektrischen Spannungen und/oder elektrischen Spannungsimpulsen zu Eigenschwingungen anregbar ist.

13. Abgasanlage einer Brennkraftmaschine (2), insbesondere eines Kraftfahrzeugs, mit einem Abgasstrang (3), der ein Abgasrohr (4) und wenigstens eine in das Abgasrohr (4) eingebundene Abgasbehandlungseinrichtung (5) aufweist, wobei wenigstens ein Schwingungstilger (6) nach einem der Ansprüche 6 bis 12 mit dem Abgasstrang (3) gekoppelt ist.
